# EUROPÄISCHE PATENTANMELDUNG

(11) **EP 1 426 648 A1**
(43) Veröffentlichungstag der Anmeldung: **09.06.2004**
(21) Anmeldenummer: 03022794.6
(22) Anmeldetag: 11.10.2003
(51) Int. Cl.: F16F 9/04

(54) **Mit Extravolumen versehener Luftfederdeckel und Verfahren zu seiner Herstellung**

(30) Priorität: 06.12.2002 DE 10257009
(71) Anmelder: Continental Aktiengesellschaft, 30165 Hannover (DE)
(72) Erfinder: Gleu, Jens-Uwe, 30855 Langenhagen (DE)

(57) **Zusammenfassung**

2.1 Eine Luftfeder besteht im Wesentlichen aus einem Luftfederdeckel (2), einem Rollbalg und einem Abrollkolben, die gemeinsam einen variablen Luftfederraum umschließen. Um das Federungsverhalten komfortabler zu gestalten, werden Luftfedern zunehmend mit einem Extravolumen (4) ausgestattet. Zu diesem Zweck besteht der Luftfederdeckel (2) aus zwei Schalen (2a, 2b), die als Gehäuse für das gewünschte Extravolumen (4) dienen.
2.2 Um eine luftdichte und hochfeste Verbindung der beiden, insbesondere tiefgezogenen oder gespritzten Luftfederdeckel-(Halb-)Schalen (2a, 2b) kostengünstiger herzustellen, werden die beiden zu verbindenden Schalen (2a, 2b) durch einen Bördelvorgang miteinander verbunden oder die Verbindung der beiden zu verbindenden Schalen (2a, 2b) wird durch die Verbördelung ihres umgelegten Randes mit einer aus plastisch verformbarem Material bestehenden Bördelklammer (10) hergestellt.

## Beschreibung

### Anwendungsgebiet

Die Erfindung betrifft eine Luftfeder, dessen Deckel ein Extravolumen aufweist, und ein Verfahren zur Herstellung eines solchen Luftfederdeckels, - gemäß den Oberbegriffen der Ansprüche 1 und 8.

### Zweck

Ein großes Volumen bei gegebenem Bauraum sowie die Gewährleistung von Freigang ist häufig nicht ohne komplizierte Luftfederdeckelgeometrien mit starken Hinterschnitten zu realisieren. Solche Luftfederdeckel lassen sich regelmäßig durch eine Teilung in Querrichtung durch zwei
- z. B. durch Tiefziehen hergestellte - Schalen darstellen, die dann anschließend luftdicht und hochfest miteinander verbunden werden müssen. Die Erfindung bezieht sich auf die kostengünstige, luftdichte und hochfeste Verbindungstechnik dieser (Tiefzieh)Halbschalen.

### Stand der Technik

Zur Verbindung derartig schalenförmiger Gehäuseteile sieht die bisherige Praxis gasdichtes Schweißen oder Kleben mit anschließender Helium-Leckage-Prüfung vor. Sowohl das Schweißen oder Kleben als auch die nachträgliche Leckageprüfung ist für die Herstellung eines Massenartikels zu aufwendig.

So beschreibt z. B. die DE-OS 34 44 577 A1 eine luftgefederte Aufhängung mit einem Stoßdämpfer und einer Hauptluftfederkammer, der eine weitere Luftkammer zugeordnet ist, wobei die zylindrischen Gehäuseteile über den gesamten Randbereich miteinander *verschweißt* sind (S. 8, unten; S. 9, oben).
Die in der DE-OS 35 09 943 A1 beschriebene Luftfeder weist ebenfalls eine Haupt- sowie Hilfsluftkammer auf. Auch hier sind die verschiedenen zylindrischen Gehäuseteile miteinander *verschweißt* (S. 11, unten; S. 12, oben).
In der Auslegeschrift 1 039 375 wird eine Luftfeder, insbesondere zur Abfederung von Kraftfahrzeugen beschrieben, deren kappenartigen Teile längs des Randes miteinander *verschweißt* sind.
Die Luftfeder gemäß US 2,893,104 weist ein großes Volumen auf. Der Rand des Behälters weist eine *Schweißnaht* auf.
Ober- und Unterteil des in der EP 0 932 513 B1 beschriebenen Federbein-Gehäuses sind rundum miteinander *verschweißt*.
Bei dem in der US 3,700,225 beschriebenen Federbein ist das Gehäuse mit dem Luftfederdeckel *verschweißt*.
D. h.: Die in der Luftfedertechnik allgemein übliche Methode zur druckdichten Verbindung von verschiedenen Gehäuseteilen besteht in der Herstellung einer
*Schweißnaht*.

### Aufgabe der Erfindung

Die Aufgabe der Erfindung besteht darin, die luftdichte und hochfeste Verbindung zweier, insbesondere tiefgezogener Luftfederdeckel-Halbschalen kostengünstiger zu gestalten.

### Lösung und Vorteile

Gemäß Anspruch 1 werden die beiden Teile, die miteinander verbunden werden sollen, durch eine Bördelverbindung fest miteinander verbunden.

Gemäß Anspruch 2 werden die zu verbindenden Teile durch Verbördelung einer aus plastisch verformbarem Material hergestellten Klammer (z. B. Stahlring) fest miteinander verbunden.

Die einzelnen Schalen (das Ober- und das Unterteil) können durch separate und optimierte Herstellungsverfahren (wie z. B. Tiefziehen, Spritzen, Gießen) gefertigt werden.

In die Verbördelung selbst oder zwischen die Anlageflächen der (Halb-)Schalen kann zur Verbesserung einer luftdichten Abdichtung ein Elastomerteil (z. B. ein O-Ring) eingelegt werden. Die Verbindung kann bei geeigneter Ausführung des elastomeren Einlegeteils zur Schwingungsisolation verwendet werden.

Die Geometrie der zu verbindenden Teile muss an der Verbindungsstelle nicht kreisrund sein sondern kann elliptisch oder beliebig ausgeführt werden.
Die beiden (Halb-)Schalen können aus verschiedenen Materialien gefertigt sein. Auch können die Schalen aus Materialien bestehen, die nicht plastisch verformbar sind.

Die Bördelklammer kann im unverbauten Zustand ein rein zylindrischer Ring sein oder sein Querschnitt kann bereits konkav vorgeformt sein.
Die Verbördelung kann durch einen axialen Umformprozess (Presse) bzw. durch eine Serie von axialen Umformprozessen sehr schnell und kostengünstig ausgeführt werden. Auch durch Rollieren kann die Verbördelung ausgeführt werden.

Insgesamt ergibt sich ein kostengünstiges Herstellungsverfahren. Auf eine nachträgliche Dichtigkeitsprüfung kann verzichtet werden, d. h. mit dem erfindungsgemäßen Verfahren ist ein beträchtlicher Kostenvorteil verbunden..
Das erfindungsgemäße Verfahren lässt sich überall dort anwenden, wo Hohlkörper hergestellt werden, die sich durch Teilung einzeln leicht fertigen lassen.

### Zeichnungen

Die erfindungswesentlichen Details sollen anhand der beiden in den beigefügten Zeichnungen im Längsschnitt dargestellten Luftfederdeckelkammern erläutert werden.

### Beschreibung

Eine Luftfeder (nicht dargestellt) weist ein definiertes Luftfedervolumen auf, das von einem Deckel 2, einem Rollbalg 9 und einem Abrollkolben druckdicht umschlossen ist. Der Rollbalg 9 wird mittels eines Klemmringes 7 an dem Deckel 2 befestigt. Um das Federungsverhalten komfortabler zu gestalten, werden Luftfedern zunehmend mit einem zusätzlich genutzten Volumen 4 ausgestattet. Dieses Extravolumen 4 befindet sich beispielsweise im Bereich des Luftfederdeckels 2. Zu diesem Zweck besteht der Luftfederdeckel 2 aus zwei (Halb-)Schalen 2a, 2b, die als Gehäuse für das gewünschte Extravolumen 4 dienen. Dies ist dem Fachmann bekannt.
Erfindungswesentlich ist die luftdichte und hochfeste Verbindung der beiden, z. B. durch Tiefziehen hergestellten Schalen 2a, 2b miteinander.

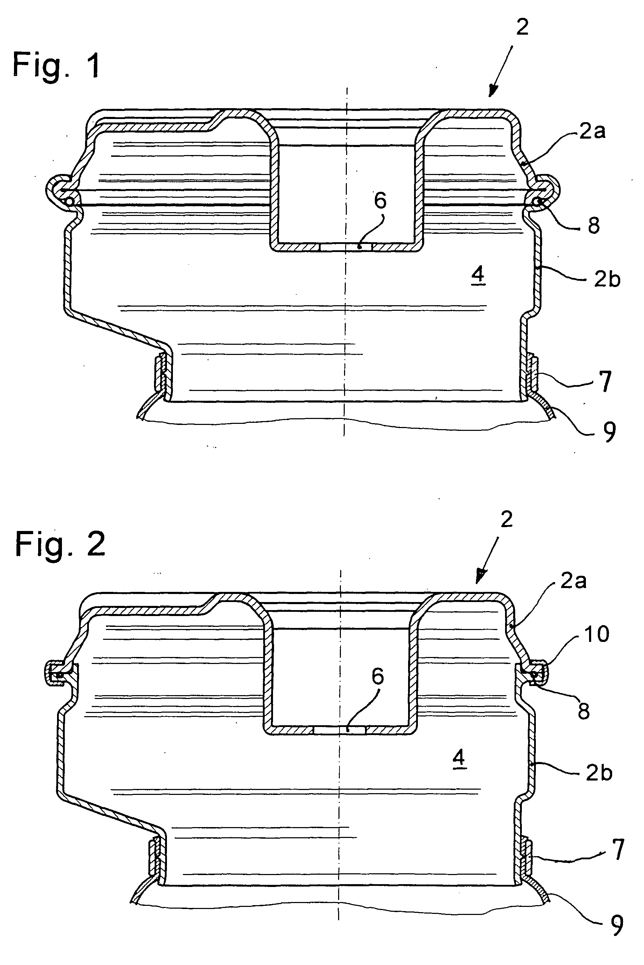

Die Fig. 1 und 2 zeigen jeweils einen aus zwei Schalen (Oberteil 2a, Unterteil 2b) bestehenden Luftfederdeckel 2. Die beiden Schalen 2a, 2b umschließen ein Extravolumen 4. Erfindungsgemäß werden die beiden zu verbindenden Teile 2a, 2b durch einen Bördelvorgang fest miteinander verbunden.

In der in Fig. 1 dargestellten Ausführungsform des Luftfederextravolumens 4 ist der umzubördelnde Rand der oberen Schale 2a doppelt gelegt. Außerdem weist die obere Schale 2a eine ringförmige Mulde zur Aufnahme eines O-Ringes 8 auf. Der umgebördelte Rand der unteren Schale 2b umgreift sowohl den doppelt gelegten Rand der oberen Schale 2a als auch den O-Ring 8. Z. B. durch Rollieren entsteht eine druckdichte und zugfeste Verbindung der beiden Schalen 2a, 2b miteinander, die so das Extravolumen 4 bilden.

Gemäß der in Fig. 2 dargestellten alternativen Ausführungsform werden Ober- 2a und Unterteil 2b aus Materialien oder mit Merkmalen, die auch eine andersartige Verbindung (z. B. Verschraubung) erlauben, durch die Verbördelung einer aus plastisch verformbarem Material hergestellten Klammer 10 (z. B. Stahlring) fest miteinander verbunden. Eine der Anlageflächen der Halbschalen 2a, 2b weist eine Aussparung zur Aufnahme eines O-Ringes 8 auf.

### Bezugszeichenliste

- 2: Luftfederdeckel
- 2a, 2b: (Halb-)Schalen des Luftfederdeckels, Oberteil, Unterteil
- 4: Extravolumen
- 6: Öffnung für Dämpferstange
- 7: Klemmring
- 8: Elastomerteil, O-Ring
- 9: Rollbalg
- 10: Bördelklammer

## Patentansprüche

1. Luftfeder
mit einem Luftfederdeckel (2), einem Rollbalg und einem Abrollkolben,
die gemeinsam einen variablen Luftfederinnenraum umschließen,
und wobei der Luftfederdeckel (2) aus zwei aufeinander gerichteten Schalen (Oberteil 2a, Unterteil 2b) mit dazwischenliegendem Extravolumen (4) gebildet wird,
**dadurch gekennzeichnet,**
**dass** die Verbindungsstelle der beiden Schalen (2a, 2b) eine druckdichte und feste Bördelnaht ist.

2. Luftfeder nach dem Oberbegriff des Anspruchs 1,
**dadurch gekennzeichnet,**
**dass** die Verbindungsstelle der beiden Schalen (2a, 2b) eine Bördelklammer (10) aufweist.

3. Luftfeder nach Anspruch 1 oder 2,
**dadurch gekennzeichnet,**
**dass** die Bördelnaht eine vorzugsweise ringförmige Mulde zur Aufnahme eines Dichtringes (8) aufweist.

4. Luftfeder nach einem der Ansprüche 1 bis 3,
**dadurch gekennzeichnet,**
**dass** der zu umbördelnde Rand doppelt gelegt ist.

5. Luftfeder nach einem der Ansprüche 1 bis 4,
**dadurch gekennzeichnet,**
**dass** die Bördelnaht eine kreisrunde, elliptische oder unregelmäßige Gestalt aufweist.

6. Luftfeder nach einem der Ansprüche 2 bis 5,
**dadurch gekennzeichnet,**
**dass** die beiden Schalen (2a, 2b) aus unterschiedlichen Materialien bestehen.

7. Luftfeder nach einem der Ansprüche 2 bis 6,
**dadurch gekennzeichnet,**
**dass** die Bördelklammer (10) im unverbauten Zustand ein flacher Ring ist oder
**dass** sein Querschnitt bereits konkav vorgeformt ist und der Form der Schalen (2a, 2b) an der Verbindungsstelle entspricht.

8. Verfahren zur Verbindung der Schalen eines aus zwei Schalen (2a, 2b) bestehenden Luftfederdeckels (2) gemäß dem Oberbegriff de Anspruchs 1,
**dadurch gekennzeichnet,**
**dass** die beiden zu verbindenden Schalen (2a, 2b) durch einen Bördelvorgang fest und druckdicht miteinander verbunden werden.

9. Verfahren nach dem Oberbegriff des Anspruchs 8,
**dadurch gekennzeichnet,**
**dass** die Verbindung der beiden zu verbindenden Schalen (2a, 2b) durch die Verbördelung ihres umgelegten Randes mit einer aus plastisch verformbarem Material bestehenden Bördelklammer (10) hergestellt wird.

10. Verfahren nach Anspruch 8 oder 9,
**dadurch gekennzeichnet,**
**dass** vor Durchführung des Bördelvorganges ein Elastomerteil (8) in eine ringförmige Mulde des zu bördelnden Randes gelegt wird.

11. Verfahren nach einem der Ansprüche 8 bis 10,
**dadurch gekennzeichnet,**
**dass** die Verbördelung durch mindestens einen axialen Umformprozess realisiert wird.

12. Verfahren nach einem der Ansprüche 8 bis 10,
**dadurch gekennzeichnet,**
**dass** die Verbördelung durch Rollieren erfolgt.

13. Verfahren nach einem der Ansprüche 8 bis 12,
**dadurch gekennzeichnet,**
**dass** die einzelnen Schalen (2a, 2b) durch separate Fertigungsverfahren hergestellt werden.

14. Verfahren nach Anspruch 13,
**dadurch gekennzeichnet,**
**dass** die Materialien, aus denen die Schalen (2a, 2b) bestehen, nicht plastisch verformt werden.
